# FASCICULE DE BREVET EUROPEEN

(11) **EP 2 857 223 B1**
(45) Date de publication et mention de la délivrance du brevet: **22.11.2017**
(21) Numéro de dépôt: 14290246.9
(22) Date de dépôt: 13.08.2014
(51) Int. Cl.: B60B 33/00

(54) **Pivot pour meuble et meuble comportant un tel pivot**
Rolle für ein Möbelstück sowie ein Möbelstück mit entsprechender Rolle.
Caster wheel for furniture and furniture with according caster.

(30) Priorité: 19.08.2013 FR 1301945
(43) Date de publication de la demande: 08.04.2015
(73) Titulaire: Tente Roulettes Polymeres - Bruandet, 39700 La Barre (FR)
(72) Inventeur: Marquiset, Cyril, 25410 Pouilley-Français (FR); Dayt, Patrick, 25000 Besançon (FR)
(74) Mandataire: Flavenot, Bernard

(56) Documents cités:
- EP-B1- 2 237 972
- US-A- 1 929 743
- US-A- 4 129 921
- US-A- 4 361 930

## Description

La présente invention concerne les pivots pour des roulettes comportant au moins un carter et une roue montée en rotation par rapport au carter, ces pivots permettant de relier les roulettes à des meubles pour les déplacer facilement par roulement.

La présente invention concerne aussi les meubles comportant au moins un tel pivot.

Il est bien entendu que, par meuble, il est compris, au sens de la présente description, tout objet de quelque nature que ce soit, pour quelque fonction que ce soit, par exemple une table, un lit, une armoire, un charriot, etc., apte à être déplacé par roulement sur un sol.

Il est déjà connu un pivot pour roulette pour réaliser une liaison entre un châssis de meuble et un carter de roulette, comme celui décrit et illustré dans le brevet EP 2 237 972, le document le plus proche US 1929743 et les documents US 4129921, US 4361930 et DE 102008007445. Selon le premier document cité ci-dessus, le pivot pour roulette comprend une première partie logée dans un orifice du carter et une seconde partie faisant saillie au-delà du carter destinée à coopérer avec le châssis d'un meuble.

La seconde partie de pivot en saillie au-delà du carter comporte deux rainures annulaires situées à distance non nulle l'une de l'autre dans chacune desquelles est positionnée sans jeu une bague élastique de retenue.

Cette réalisation répond bien à la fonction demandée mais, étant donné le nombre important de roulettes proposées sur le marché, et donc au moins autant de pivots (en général même plus de pivots que de roulettes, notamment pour pouvoir répondre aux besoins du service après-vente pour les réparations), la structure des pivots selon cet art antérieur conduit à un prix de revient de fabrication et de montage non négligeable.

Aussi, la présente invention a-t-elle pour but de réaliser un pivot pour roulette qui palie en grande partie les inconvénients de la structure de pivot pour roulette évoquée ci-dessus.

La présente invention a aussi pour but de réaliser un meuble comportant un tel pivot.

Plus précisément, la présente invention a pour objet un pivot pour relier un carter d'une roulette à un meuble, dont les caractéristiques sont listées dans la revendication 1 annexée.

D'autres caractéristiques et avantages de la présente invention apparaîtront au cours de la description suivante donnée en regard du dessin annexé à titre illustratif mais nullement limitatif, dans lequel :
La figure 1 est une vue en perspective cavalière d'un mode de réalisation du pivot pour roulette selon l'invention, et
La figure 2 est une vue en coupe partielle d'un meuble selon l'invention comportant un pivot pour roulette comme illustré sur la figure 1.

Il est tout d'abord précisé que, dans la présente description, si l'adverbe "sensiblement" est associé à un qualificatif d'un moyen donné, ce qualificatif doit être compris au sens strict ou approché.

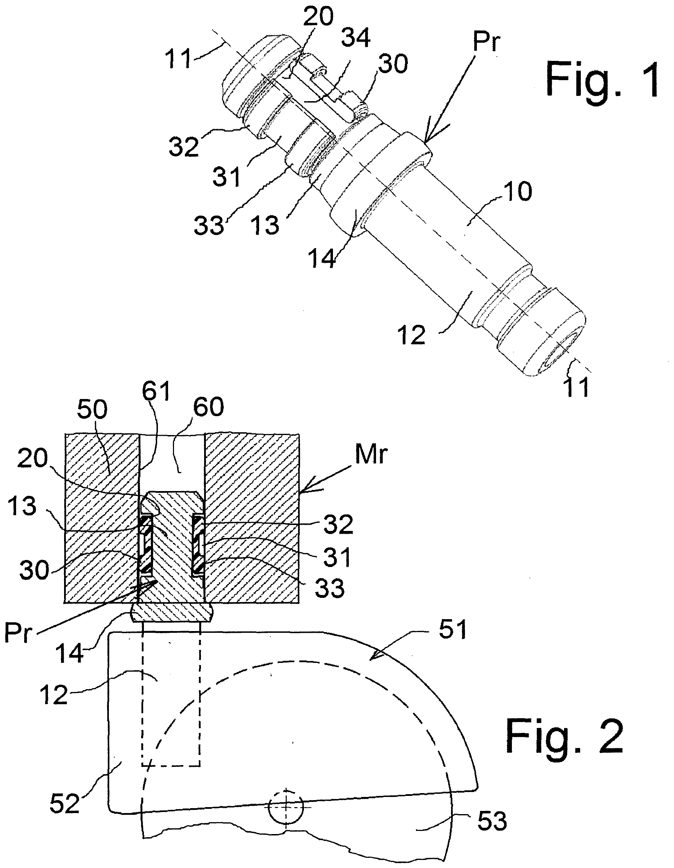

En référence aux figures 1 et 2, la présente invention se rapporte à un pivot pour roulette Pr destiné à relier un carter 52 d'une roulette 51 au châssis 50 d'un meuble Mr.

Ce pivot Pr comporte au moins un arbre 10, généralement en matériau métallique, défini selon un axe longitudinal 11 comportant deux extrémités, respectivement une extrémité destinée à être reliée au carter qui, dans la présente description, est dite "extrémité de carter" 12, et une extrémité destinée à être reliée au châssis 50 du meuble Mr qui, dans la présente description, est dite "extrémité de meuble" 13.

Selon une caractéristique de l'invention, l'extrémité de meuble 13 comporte une rainure annulaire 20 d'axe sensiblement coaxial à l'axe longitudinal 11 de l'arbre 10.

Quant au pivot Pr, il comporte une bague 30 logée dans la rainure annulaire 20.

Cette bague 30 est réalisée en une seule pièce de forme générale cylindrique de révolution, d'une hauteur est au plus égale à la largeur de la rainure 20 prise selon l'axe longitudinal 11, et présente un diamètre extérieur hors-tout maximal, lorsqu'elle est au repos non comprimée comme il sera explicité ci-après, supérieur à celui de l'extrémité de meuble 13, comme plus particulièrement visible sur la figure 1.

Quant au diamètre intérieur de la bague, il est bien évidemment au moins égal au diamètre de la rainure annulaire 20.

La bague comporte, sur sa surface latérale extérieure, une gorge 31 réalisée de façon à définir, à ses deux extrémités, deux collerettes en saillie 32, 33 qui, de façon très préférentielle, se situent aux deux extrémités de la bague 30 et dont le diamètre définit le diamètre extérieur hors-tout maximal de cette bague.

Dans une réalisation particulièrement préférée, cette bague 30 est une bague fendue 34, c'est-à-dire, de façon connue en soit, une bague comportant une découpe rectiligne d'épaisseur non nulle et de préférence contenue dans un plan passant par son axe de révolution, en l'espèce celui qui est confondu avec l'axe longitudinal 11.

Selon une autre réalisation plus particulièrement préférée, la bague 30 en une seule pièce est réalisée par moulage en une matière plastique ou analogue par exemple comme celle qui est connue sous la dénomination POM, c'est-à-dire polyoxyméthylène, éventuellement chargée avec différents dopants connus des hommes du métier, par exemple du verre.

De préférence, comme illustré sur les deux figures, l'extrémité de carter 12 et l'extrémité de meuble 13 sont reliées entre elles par un collet d'épaulement 14 d'un diamètre supérieur au diamètre extérieur hors-tout maximal de la bague 30, de façon à pouvoir buter contre le châssis 51 du meuble Mr (figure 2) comme explicité ci-après.

L'invention concerne également un meuble Mr, figure 2, apte à être déplacé par roulement sur un sol et comportant au moins un pivot tel que défini et décrit ci-dessus.

Ce meuble apte à être déplacé par roulement peut être de toute nature comme défini au préambule de la présente description.

Il comporte, un châssis 50 illustré schématiquement sur la figure 2, au moins une roulette 51 et des moyens pour monter cette roulette en coopération avec le châssis.

De façon connue en elle-même, la roulette comporte un carter 52 et au moins une roue 53 montée en rotation par rapport au carter 52.

Selon une caractéristique de l'invention, les moyens pour monter la roulette 51 en coopération avec le châssis 50 comportent un orifice débouchant 60 cylindrique de révolution réalisé dans le châssis 50, ayant un diamètre d'une valeur déterminée, et un pivot Pr selon l'invention présentant au moins l'une des caractéristiques définies ci-avant, avec en outre le fait que le diamètre extérieur de l'extrémité de meuble 13 et le diamètre extérieur hors-tout maximal de la bague 30 sont respectivement sensiblement inférieur et sensiblement supérieur au diamètre de valeur déterminée de l'orifice débouchant 60.

Le meuble Mr défini ci-dessus se monte de la façon suivante :
L'extrémité de meuble 13 de l'arbre 10 est enfichée en force dans l'orifice débouchant 60 et l'extrémité de carter 12 est montée en coopération avec le carter 52, selon un montage comme par exemple l'un de ceux qui sont connus de l'art antérieur et qui ne sera donc pas plus amplement décrit ici dans l'unique souci de simplifier la présente description.

Lors de l'enfichage en force de l'extrémité de meuble 13 de l'arbre 10 dans l'orifice débouchant 60, la bague 30 qui, au repos (c'est-à-dire quand elle n'est pas comprimée), a un diamètre extérieur sensiblement supérieur à celui de l'orifice débouchant se comprime (ce qui est facilité quand elle est constituée d'une bague fendue 34). Son diamètre se réduit et s'adapte automatiquement au diamètre de l'orifice débouchant.

La bague prend ainsi contact avec la paroi latérale 61 de cet orifice débouchant par ses deux collerettes 32, 33, suivant sensiblement deux cercles coaxiaux de largeur non nulle mais de relativement faible valeur comparée à la hauteur de cette extrémité de meuble 13. Ces deux cercles, situés à une distance non nulle l'un de l'autre, sont définis par tous les points de contact des deux collerettes 32, 33 avec la paroi latérale 61 de l'orifice 60 et permettent d'obtenir, de façon connue en Physique, une bonne stabilité du carter 52 et donc de la roulette 51 par rapport au châssis 50 du meuble Mr.

La bague 30 telle que définie ci-avant permet le rattrapage des jeux qui peuvent exister entre l'extrémité de meuble 13 et la paroi latérale 61 de l'orifice débouchant 60, qui sont essentiellement dus : (i) aux méthodes de fabrication en très grande quantité du châssis 50 du meuble Mr et de l'arbre 10 du pivot Pr, (ii) à la nature des produits utilisés pour la réalisation des châssis des meubles, et (iii) aux tolérances de fabrication habituelles dans le domaine qui ne sont pas très sévères essentiellement pour réduire le coût de cette fabrication.

Il apparaît donc que la présente invention présente des avantages par rapport à l'art antérieur cité ci-avant, notamment le fait que le pivot ne comporte qu'une seule rainure, d'où un gain de temps dans l'usinage de l'arbre 10, et qu'une seule bague en anneau, d'où un gain de temps pour sa fabrication et son montage sur l'arbre 10.

## Revendications

1. Pivot (Pr) pour relier le carter d'une roulette à un meuble, ledit pivot comportant un arbre (10) défini selon un axe longitudinal (11), ledit arbre comportant deux extrémités, respectivement une extrémité pour être reliée au carter dite "extrémité de carter" (12), et une extrémité pour être reliée au meuble dite "extrémité de meuble" (13),
• l'extrémité de meuble (13) comportante une rainure annulaire (20) d'axe sensiblement coaxial au dit axe longitudinal (11),
• ledit pivot (Pr) comportante en outre une bague (30) logée dans ladite rainure annulaire (20), ladite bague étant réalisée en une seule pièce de forme générale cylindrique de révolution et d'une hauteur au plus égale à la largeur de ladite rainure (20), ladite bague (30) ayant un diamètre extérieur hors-tout maximal supérieur à celui de l'extrémité de meuble (13), **caractérisé par le fait que** ladite bague comporte en outre, sur sa surface latérale extérieure, une gorge (31) d'une largeur inférieure à la hauteur de ladite bague, de façon à définir, à ses deux extrémités, deux collerettes (32, 33).

2. Pivot selon la revendication 1, **caractérisé par le fait que** ladite bague (30) est une bague fendue (34).

3. Pivot selon l'une des revendications 1 et 2, **caractérisé par le fait que** ladite bague (30) en une seule pièce est réalisée en une matière plastique moulée.

4. Pivot selon l'une des revendications 1 à 3, **caractérisé par le fait que** les deux dites extrémités de carter (12) et de meuble (13) sont reliées entre elles par un collet d'épaulement (14), ledit collet d'épaulement ayant un diamètre supérieur au diamètre extérieur hors-tout maximal de ladite bague (30).

5. Meuble (Mr) apte à être déplacé par roulement, comportant un châssis (50), au moins une roulette (51) et des moyens pour monter ladite roulette en coopération avec ledit châssis, ladite roulette comportant un carter (52) et au moins une roue (53) montée en rotation par rapport au carter, **caractérisé par le fait que** les moyens pour monter ladite roulette en coopération avec ledit châssis comportent :
• un orifice débouchant (60) cylindrique de révolution réalisé dans ledit châssis (50), ledit orifice débouchant ayant un diamètre d'une valeur déterminée, et
• un pivot (Pr) selon l'une des revendications 1 à 4, le diamètre extérieur de ladite extrémité de meuble (13) et le diamètre extérieur hors-tout maximal de ladite bague (30) étant respectivement sensiblement inférieur et sensiblement supérieur au diamètre de valeur déterminée du dit orifice débouchant (60), l'extrémité de meuble (13) étant enfichée dans ledit orifice débouchant et l'extrémité de carter (12) étant montée en coopération avec ledit carter (52).

## Patentansprüche

1. Zapfen (Pr) zum Verbinden des Gehäuses einer Rolle mit einem Möbelstück, wobei der Zapfen eine Welle (10) umfasst, die entlang einer Längsachse (11) definiert ist, wobei die Welle zwei Enden umfasst, ein Ende, um mit dem Gehäuse verbunden zu werden, das "Gehäuseende" (12) genannt wird, und entsprechend ein Ende, um mit dem Möbelstück verbunden zu werden, das "Möbelstückende" (13) genannt wird,
- wobei das Möbelstückende (13) eine ringförmige Nut (20) mit einer Achse, die zur Längsachse (11) im Wesentlichen koaxial ist, umfasst,
- wobei der Zapfen (Pr) ferner einen Ring (30) umfasst, der in der ringförmigen Nut (20) angeordnet ist, wobei der Ring einteilig mit einer allgemeinen rotationssymmetrischen, zylindrischen Form und einer Höhe, die höchstens gleich der Breite der Nut (20) ist, ausgebildet ist, wobei der Ring (30) einen maximalen Gesamtaußendurchmesser aufweist, der größer ist als jener des Möbelstückendes (13), **dadurch gekennzeichnet, dass** der Ring ferner an seiner seitlichen äußeren Oberfläche eine Vertiefung (31) mit einer Breite umfasst, die geringer ist als die Höhe des Rings, um an seinen zwei Enden zwei Kragen (32, 33) zu definieren.

2. Zapfen nach Anspruch 1, **dadurch gekennzeichnet, dass** der Ring (30) ein geschlitzter Ring (34) ist.

3. Zapfen nach einem der Ansprüche 1 und 2, **dadurch gekennzeichnet, dass** der Ring (30) einteilig aus einem geformten Kunststoffmaterial hergestellt ist.

4. Zapfen nach einem der Ansprüche 1 bis 3, **dadurch gekennzeichnet, dass** die zwei Enden, das Gehäuseende (12) und das Möbelstückende (13), durch einen Schulterbund (14) miteinander verbunden sind, wobei der Schulterbund einen Durchmesser aufweist, der größer ist als der maximale Gesamtaußendurchmesser des Rings (30).

5. Möbelstück (Mr), das geeignet ist, durch Rollen verlagert zu werden, umfassend ein Gestell (50), mindestens eine Rolle (51) und Mittel zum Montieren der Rolle in Zusammenwirkung mit dem Gestell, wobei die Rolle ein Gehäuse (52) und mindestens ein Rad (53) umfasst, das in Bezug auf das Gehäuse drehbar montiert ist, **dadurch gekennzeichnet, dass** die Mittel zum Montieren der Rolle in Zusammenwirkung mit dem Gestell umfassen:
- eine rotationssymmetrische zylindrische Mündungsöffnung (60), die im Gestell (50) ausgebildet ist, wobei die Mündungsöffnung einen Durchmesser mit einem bestimmten Wert aufweist, und
- einen Zapfen (Pr) nach einem der Ansprüche 1 bis 4, wobei der Außendurchmesser des Möbelstückendes (13) und der maximale Gesamtaußendurchmesser des Rings (30) wesentlich geringer und entsprechend wesentlich größer als der Durchmesser mit bestimmtem Wert der Mündungsöffnung (60) sind, wobei das Möbelstückende (13) in die Mündungsöffnung eingesteckt ist und das Gehäuseende (12) in Zusammenwirkung mit dem Gehäuse (52) montiert ist.

## Claims

1. A pivot (Pr) for connecting the casing of a caster to a piece of furniture, said pivot comprising a shaft (10) defined along a longitudinal axis (11), said shaft having two ends, respectively one end for connection to the casing and referred to as the "casing" end (12) and one end for connection to the furniture and referred to as the "furniture" end (13),
- the furniture end (13) including an annular groove (20) of axis substantially coinciding with said longitudinal axis (11);
- said pivot (Pr) further including a ring (30) housed in said annular groove (20), said ring being made as a single piece generally in the form of a cylinder of revolution and of height no greater than the width of said groove (20), said ring (30) having a maximum overall outside diameter greater than that of the furniture end (13);
the pivot being **characterized by** the fact that said ring further includes a groove (31) in its outside surface, which groove is of width less than the height of said ring, so as to define two flanges (32, 33) at each of the two ends of the ring.

2. A pivot according to claim 1, **characterized by** the fact that said ring (30) is a split ring (34).

3. A pivot according to claim 1 or claim 2, **characterized by** the fact that said one-piece ring (30) is made of a molded plastics material.

4. A pivot according to any one of claims 1 to 3, **characterized by** the fact that said two ends, the casing end (12) and the furniture end (13), are connected together by a shoulder-forming collar (14), said shoulder-forming collar having a diameter greater than the maximum overall outside diameter of said ring (30).

5. A piece of furniture (Mr) suitable for being moved on wheels, the piece of furniture comprising a structure (50), at least one caster (51), and means for mounting said caster to co-operate with said structure, said caster comprising a housing (52) and at least one wheel (53) mounted to rotate relative to the casing, the piece of furniture being **characterized by** the fact that the means for mounting said caster to co-operate with said structure comprise:
- a circularly cylindrical open orifice (60) formed in said structure (50), said open orifice having a diameter of a determined value; and
- a pivot (Pr) according to any one of claims 1 to 4, the outside diameter of said furniture end (13) and the maximum overall outside diameter of said ring (30) being respectively perceptibly less than and perceptibly greater than the diameter of determined value of said open orifice (60), the furniture end (13) being plugged into said open orifice and the casing end (12) being mounted to co-operate with said casing (52).
